# EUROPEAN PATENT APPLICATION

(11) **EP 3 965 473 A1**
(43) Date of publication of application: **09.03.2022**
(21) Application number: 19927070.3
(22) Date of filing: 01.05.2019
(51) Int. Cl.: H04W 36/38, H04W 76/20

(54) **USER DEVICE AND COMMUNICATION METHOD**

(71) Applicant: NTT DOCOMO, INC., Chiyoda-Ku Tokyo 100-6150 (JP)
(72) Inventor: MURATA, Naoya, Tokyo 100-6150 (JP); UCHINO, Tooru, Tokyo 100-6150 (JP); HANAKI, Akihito, Tokyo 100-6150 (JP)
(74) Representative: Hoffmann Eitle
(86) International application number: PCT/JP2019/018182
(87) International publication number: WO 2020/222271

(57) **Abstract**

A user apparatus is provided. The user apparatus includes a control unit configured to determine, when a predetermined operation is triggered in a case of a predetermined-condition-based SCG connection having been configured, which of an operation of the predetermined-condition-based SCG connection or the predetermined operation is to be given priority. The control unit stops or suspends an operation that has not been given the priority.

## Description

### TECHNICAL FIELD

The present invention relates to a user apparatus and a communication method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (Non-Patent Document 1).

There is a technique referred to as a conditional handover (CHO) in which a target cell candidate is configured in advance for a user apparatus and the user apparatus requests for connection to the target cell by using quality, or the like, as a trigger.

Further, there is a technique referred to as a conditional SCG connection (CSC) in which a target cell candidate is configured in advance for a user apparatus and the user apparatus requests for connection to the target cell by using quality, or the like, as a trigger (Non-Patent Document 2).

### [Citation List]

### [Non-Patent Document]

[Non-Patent Document 1] 3GPP TS 38.300 V15.4.0 (2018-12)
[Non-Patent Document 2] 3GPP R2-1903677: Conditional PSCell addition (2019-04)
[Non-Patent Document 3] 3GPP TS 38.331 V15.4.0 (2018-12)

### SUMMARY OF THE INVENTION

### [TECHNICAL PROBLEM]

In the case where another operation is triggered after the transmission of a Complete message for a CHO configuration message, it is not clearly specified which of the CHO operation or the other operation should be given priority.

Further, in the case where another operation is triggered after the transmission of a Complete message for a CSC configuration message, it is not clearly specified which of the CSC operation or the other operation should be given priority.

The present invention has been made in view of the above. It is an object of the present invention to provide a technique that clearly specifies which of the CHO operation or the other operation should be given priority.

Further, it is an object of the present invention to provide a technique that clearly specifies which of the CSC operation or the other operation should be given priority.

### [SOLUTION TO PROBLEM]

According to an aspect of the present invention, a user apparatus is provided. The user apparatus includes a control unit configured to determine, when a predetermined operation is triggered in a case of a predetermined-condition-based handover having been configured, which of an operation of the predetermined-condition-based handover or the predetermined operation is to be given priority. The control unit stops or holds (suspends) an operation that has not been given the priority.

According to an aspect of the present invention, a user apparatus is provided. The user apparatus includes a control unit configured to determine, when a predetermined operation is triggered in a case of a predetermined-condition-based SCG connection having been configured, which of an operation of the predetermined-condition-based SCG connection or the predetermined operation is to be given priority. The control unit stops or holds (suspends) an operation that has not been given the priority.

### [ADVANTAGEOUS EFFECTS OF INVENTION]

According to the disclosed technique, a technique is provided that clearly specifies which of the CHO operation/CSC operation or the other operation should be given priority, and thus, load balancing is realized, and the throughput is increased by the improved connectivity.

### BRIEF DESCRIPTION OF THE DRAWINGS

Fig. 1 is a drawing illustrating a wireless communication system according to an embodiment of the present invention.
Fig. 2 is a drawing illustrating CHO.
Fig. 3 is a drawing illustrating a problem.
Fig. 4 is an example of a sequence diagram illustrating operations of a user apparatus in an embodiment of the present invention.
Fig. 5 is an example of a sequence diagram illustrating operations of a user apparatus in an embodiment of the present invention.
Fig. 6 is a drawing illustrating CSC.
Fig. 7A is a drawing illustrating a problem in the case where both of CHO and CSC are configured.
Fig. 7B is a drawing illustrating a problem in the case where both of CHO and CSC are configured.
Fig. 7C is a drawing illustrating a problem in the case where both of CHO and CSC are configured.
Fig. 7D is a drawing illustrating a problem in the case where both of CHO and CSC are configured.
Fig. 8 is a drawing illustrating an example of a functional structure of a base station apparatus 10 according to an embodiment of the present invention.
Fig. 9 is a drawing illustrating an example of a functional structure of a user apparatus 20 according to an embodiment of the present invention.
Fig. 10 is a drawing illustrating an example of a hardware structure of a base station apparatus 10 or a user apparatus 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in an embodiment of the present invention, the duplex method may be TDD (Time Division Duplex), FDD (Frequency Division Duplex), or other methods (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station apparatus 10 or the user apparatus 20 is configured. Here, the "indication" may be an explicit indication or an implicit indication. In other words, the "indication" may be an explicit indication or an implicit indication as long as information/condition/value/procedure necessary for configuring the radio parameter, etc., can be obtained by a configuring subject (e.g., user apparatus) at the time of configuring the radio parameter, etc.

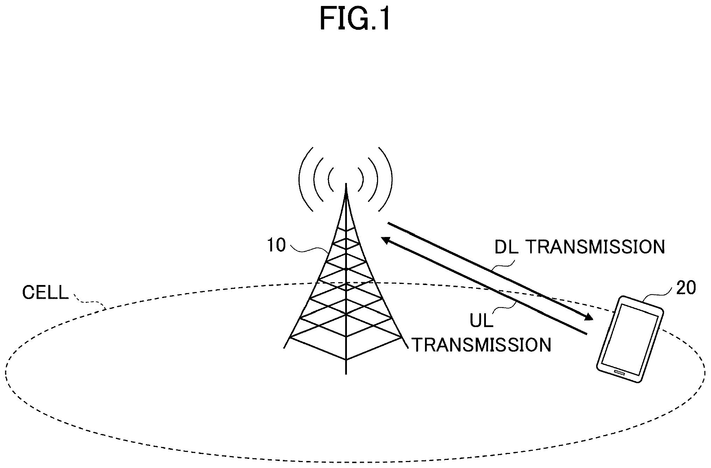

Fig. 1 is a drawing illustrating a wireless communication system according to an embodiment of the present invention. As illustrated in Fig. 1, the wireless communication system includes a base station apparatus 10 and a user apparatus 20. In Fig. 1, a single base station apparatus 10 and a single user apparatus 20 are illustrated as examples. There may be a plurality of the base station apparatuses 100 and a plurality of the user apparatuses 200.

The base station apparatus 10 is a communication apparatus that provides one or more cells and performs wireless communications with the user apparatus 20. Physical resources of the radio signal may be defined in the time domain and the frequency domain, the time domain may be defined by the number of OFDM symbols, and the frequency domain may be defined by the number of sub-carriers or resource blocks. As shown in FIG. 1, the base station apparatus 10 transmits a control signal or data in DL (Downlink) to the user apparatus 20 and receives a control signal or data in UL (Uplink) from the user apparatus 20.

The user apparatus 20 may be a communication apparatus that includes a wireless communication function such as a smart-phone, a mobile phone, a tablet, a wearable terminal, or a communication module for M2M (Machine-to-Machine). As shown in FIG. 1, the user apparatus 20 uses various communication services provided by the wireless communication system by receiving control signals or data in DL from the base station apparatus 10 and transmitting control signals or data in UL to the base station apparatus 10.

The user apparatus 20 performs measurement in order to obtain a communication status. An event is specified as a measurement configuration by the base station apparatus 10 to the user apparatus 20. The user apparatus 20 transmits a measurement report to the base station apparatus 10 in the case where a condition related to the measurement result is satisfied, the condition being configured according to the event.

### (CHO)

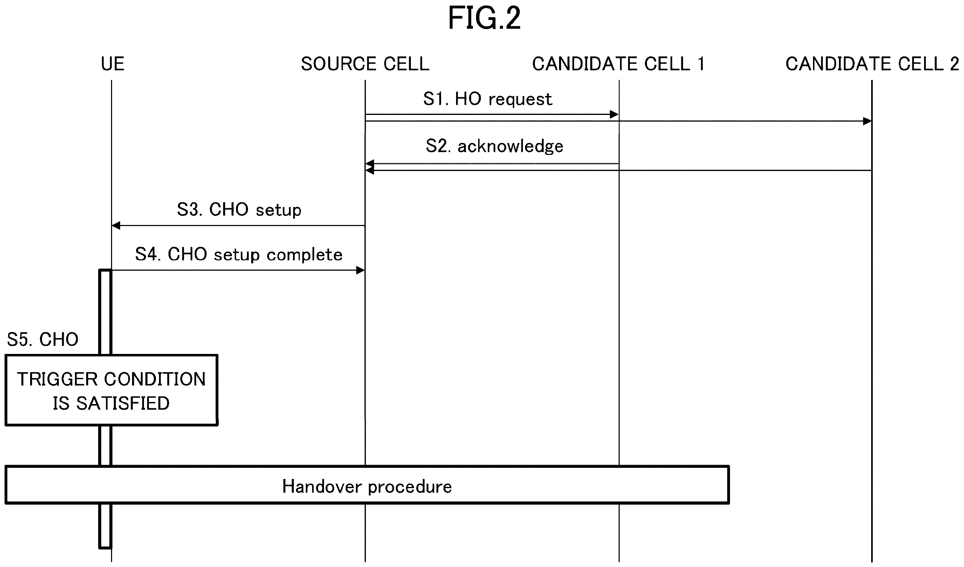

Fig. 2 is a drawing illustrating CHO.

In step S1 of Fig. 2, a handover request (HO request) is transmitted from a source cell to a candidate cell 1 and a candidate cell 2. Here, the source cell, the candidate cell 1, and the candidate cell 2 may be cells within the same base station apparatus 10, or may be cells belonging to different base station apparatuses 10. In step S2, acknowledgment (acknowledge) is transmitted from the candidate cell 1 and the candidate cell 2 to the source cell. In step S3, a CHO setup is transmitted from the source cell to a user apparatus UE. In step S4, a CHO setup complete is transmitted from the user apparatus UE to the source cell. In step S5, the user apparatus UE executes a handover procedure when a trigger condition, such as quality, is satisfied. Hereinafter, messages related to CHO are described as a CHO setup, a CHO setup complete, or the like. However, names of the messages are not limited to start with CHO. The messages may be referred to as names starting with RRC.

### (Problem)

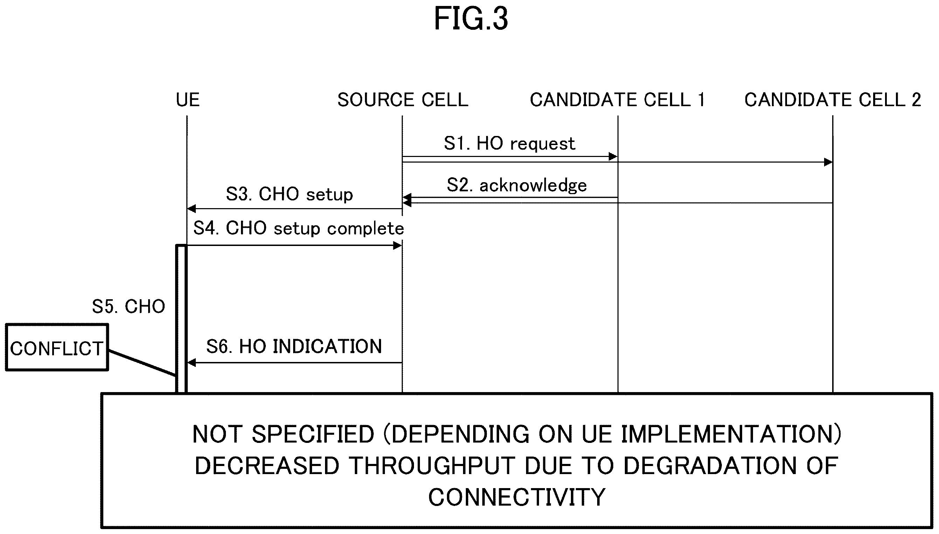

Fig. 3 is a drawing illustrating a problem.

As illustrated in Fig. 3, in the case where, after the transmission of a CHO setup complete from the user apparatus UE to the source cell in step S4, a message indicating handover (HO indication) is transmitted from the source cell to the user apparatus UE in step S6, it is not specified which of an operation of CHO or an operation of handover indicated by the HO indication should be given priority, wherein the CHO setup has been completed. In other words, conflict handling between an operation of CHO in the user apparatus UE and an operation of handover indicated by the HO indication is not specified (how to handle conflicting operations is not specified). It should be noted that the handover may include an SpCell change procedure, a procedure including a random access procedure, a procedure including ReconfigurationWithSync (non patent document 3), a procedure of transitioning to a connection with a cell/frequency/band/BWP/base station different from the current cell/frequency/band/BWP/base station, or a procedure of transitioning to a connection with a cell/frequency/band/BWP/base station indicated by the base station.

For example, due to the fact that the conflict handling is not specified, there may be a case in which, in spite of the fact that the user apparatus UE is expected to give priority to a handover indicated by a network to improve load balancing, the user apparatus UE may give priority to the CHO operation depending on the implementation of the user apparatus UE. In this case, there is a problem of decreased throughput due to the degradation of network connectivity.

### (Embodiment 1)

As an embodiment 1, there is consideration of: determining which of the CHO operation or the other operation should be given priority in a case of the CHO having been configured (in a case of the CHO having been permitted); executing an operation that has been given priority; and stopping or holding (suspending) an operation that has not been given priority. "In a case of the CHO having been configured" may be assumed to be: in a case where an indication message (e.g., RRC message) for configuring CHO has been received from a network; in a case where the indication message is processed; or in a case where a predetermined period has elapsed since the indication message was received (for example, after transmission of a Complete (Complete) in response to the message for configuring CHO) .

It should be noted that, in the case where an operation that has not been given priority is held, the held operation may be resumed by a resume trigger.

As opposed to the operation that has been given priority (prioritized operation), an operation that has not been given priority may be referred to as an operation that has been non-prioritized, or a subordinated operation (non-prioritized operation).

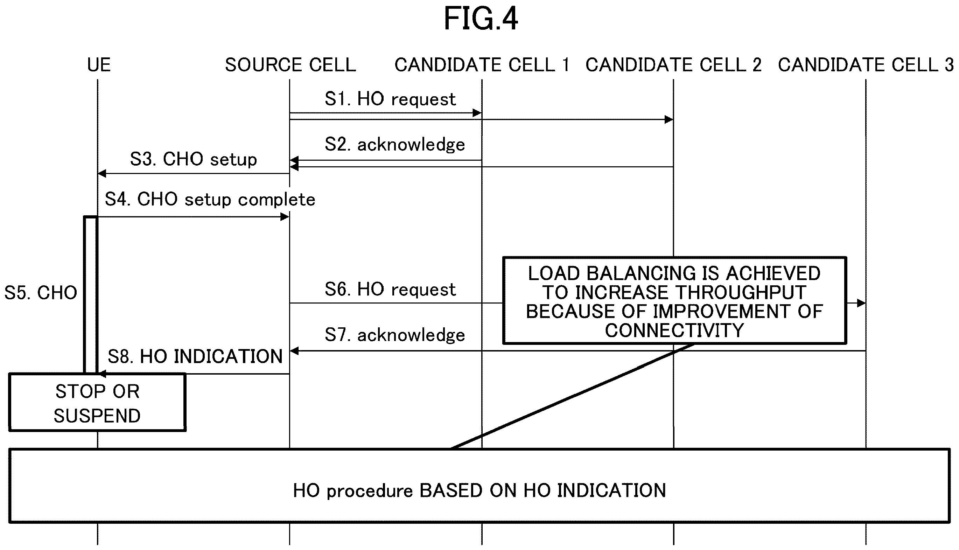

Fig. 4 is an example of a sequence diagram illustrating operations of a user apparatus in an embodiment of the present invention.

After a CHO setup complete is transmitted from the user apparatus UE to the source cell in step S4 of Fig. 4 (i.e., after CHO is configured), a HO request is transmitted from the source cell to a candidate cell 3 in step S6, an acknowledgment (acknowledge) is transmitted from the candidate cell 3 to the source cell in step S7, and a HO indication is transmitted from the source cell to the user apparatus UE in step S8. In this way, when another operation (e.g., a HO operation based on the HO indication) is triggered after the transmission of CHO setup complete, the user apparatus UE may determine priorities between the CHO operation and the other triggered operation. It should be noted that timings of steps S6 and S7 may be the same as steps S3 and S4, or may be timings before steps S3 and S4.

The priorities may be determined according to priorities defined in advance between the CHO operation and operations of the following (1), (2), (3) and (4), or the priorities may be configured by a network. Further, the priorities may vary in accordance with CHO operation phases (e.g., a trigger-waiting phase, connection-request-transmitted phase). There may be priority orders between the CHO operation and the operations of the following (1), (2), (3) and (4). Further, the priority orders may be configured by taking into account various information items in (3), and the priorities may be configured by taking into account operation types of various connection requests included in (4).
(1) RRC release operation
(2) Reconnection operation
(3) Operations of HO, other CHO, other CSC
(4) Operations of connection request

It should be noted that, with respect to priorities between the CHO operation and operations of HO, other CHO, and other CSC, the priorities may be configured according to the target cell/cell information (eNB, gNB, frequency, cell, BWP (Bandwidth part), beam (e.g., SSB, CSI-RS, TCI), PHR (Power headroom), CSI).

The operations of connection request in the above (4) include all or a part of steps necessary for the user apparatus to request the connection with the base station, such as a random access procedure (RA procedure) in case of out of uplink synchronization, a random access procedure triggered by an SR (Scheduling Request) (RA procedure triggered by SR), PUSCH transmission for transmitting BSR (Buffer Status Report), or the like.

Priority information for the CHO operation may be indicated by a message for indicating (triggering) other operations, and the priority may be determined according to the indicated priority information.

### (Process in case of the CHO operation having been subordinated)

After the CHO operation is subordinated, the user apparatus 20 may stop or hold (suspend) the CHO operation.

The CHO operation may be stopped or held according to the prioritized operation. Whether the CHO operation should be stopped or held may be configured by a network for each of the prioritized operations.

The prioritized operations may include operations of the above (1), (2), (3) and (4).

Information indicating stopping or holding (suspending) of the CHO operation may be indicated by a message for indicating (triggering) other operations. The CHO operation may be stopped or held (suspended) according to the indicated information.

The user apparatus 20 may autonomously determine whether the CHO operation should be stopped or held (suspended).

In the case where the user apparatus 20 autonomously determines whether the CHO operation should be stopped or held (suspended), cell information items (eNB, gNB, frequency, cell, BWP, beam (e.g., SSB, CSI-RS, TCI), PHR, CSI) may be taken into account, or the user apparatus 20 may be configured by a network to take into account the cell information items, or what should be taken into account may be configured by a network.

In the case where the user apparatus 20 autonomously determines whether the CHO operation should be stopped or held (suspended), the user apparatus 20 may report the determination result to the network using RRC (Radio Resource Control), MAC (Media access control) CE (Control element), or a L1 signal.

### (Resume/stop suspended CHO operation)

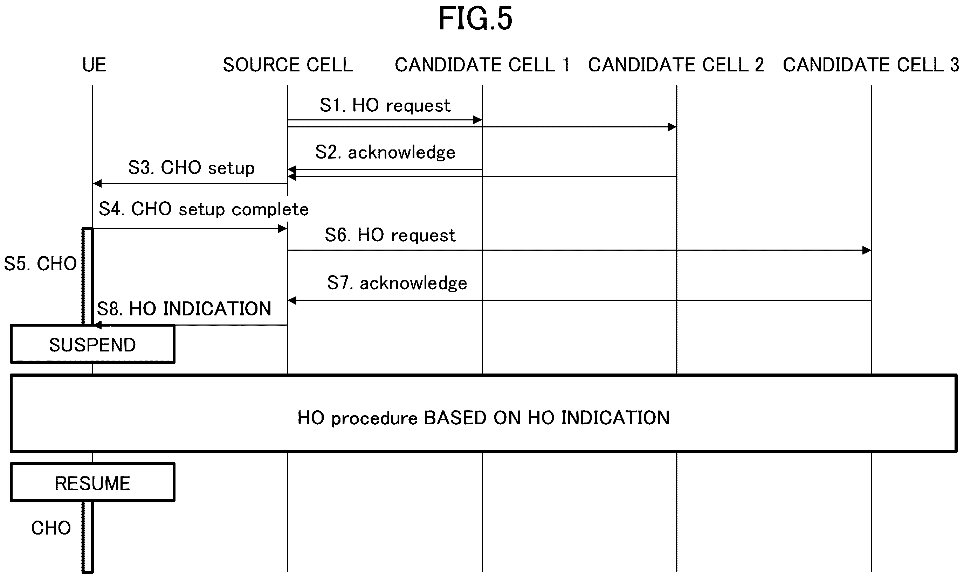

Fig. 5 is an example of a sequence diagram illustrating operations of a user apparatus in an embodiment of the present invention. Fig. 5 illustrates a case in which the suspended CHO operation is resumed (restarted) when the prioritized operation is finished.

In the case where the CHO operation is suspended, the suspended CHO operation may be resumed (restarted) when the prioritized operation is finished. Here, in the case where a resume timer is set, the resume timer may be stopped.

In the case where the CHO operation is suspended, the resume timer may be set and the CHO operation may be resumed when the timer expires. Here, a start timing of the resume timer may be: when the CHO operation is suspended; when the prioritized operation is started; when the prioritized operation is finished; when a start message of the resume timer is received from a network using RRC, MAC CE, or an L1 signal; or when a value of the resume timer is updated.

The value of the resume timer (expiration value) may be configured (set) by a network using RRC, MAC CE, or an L1 signal. Further, the expiration value of the resume timer may be a single value, or may be configured (set) in accordance with the prioritized operation or with the source cell/target cell information (RAT, eNB, gNB, frequency, cell, BWP, beam (e.g., SSB, CSI-RS, TCI), PHR, CSI, RSRP (Reference Signal Received Power), RSRQ (Reference Signal Received Quality), and SINR (Signal to Interference plus Noise Ratio)).

The suspended CHO operation may be resumed when a resume message for the suspended CHO operation is received using RRC, MAC CE, or an L1 signal. Here, in the case where a resume timer is set, the resume timer may be stopped.

The suspended CHO operation may be stopped when a stop message for the suspended CHO operation is received using RRC, MAC CE, or an L1 signal. Here, in the case where a resume timer has been set, the resume timer may be stopped.

The suspended CHO operation may be stopped when an RRC release is triggered. Here, in the case where a resume timer has been set, the resume timer may be stopped.

The suspended CHO operation may be stopped when a cell is changed. Here, in the case where a resume timer is set, the resume timer may be stopped.

The suspended CHO operation may be stopped when reconnection is performed. Here, in the case where a resume timer is set, the resume timer may be stopped.

### (Others)

In the case where a suspension and a stop of the CHO operation occur substantially simultaneously, the suspension or the stop may be given priority.

An operation that has occurred earlier may be given priority, or an operation that has occurred later may be given priority.

The stop may be given priority.

Which of the stop or the suspension should be given priority may be configured by a network.

The user apparatus 20 may perform a part or all of the operations of the following (1), (2), and (3) when the CHO operation is stopped or suspended.
(1) MAC reset (in order to stop a random access procedure, and to achieve status matching after the stop)
(2) RLC reset (in order to achieve status match after the stop)
(3) PDCP reestablishment/PDCP data recovery (in order to achieve status matching after the stop)

### (Configuration capability)

With respect to configuration capability, the network may store (hold) information indicating whether the user apparatus 20 has capabilities of the following (1), (2), (3), (4), (5), and (6) in advance, and the user apparatus 20 may have a part or all of the capabilities of the following (1), (2), (3), (4), (5), and (6). The information indicating whether the user apparatus 20 has capabilities of the following (1), (2), (3), (4), (5), and (6) may be reported to a network by the user apparatus 20. The information to be reported may include a part or all of the information indicating whether the user apparatus 20 has capabilities of the following (1), (2), (3), (4), (5), and (6).
(1) Capability for configuring CHO
(2) Configuration capability of priority between CHO and RRC release by a network
(3) Configuration capability of priority between CHO and reconnection by a network
(4) Configuration capability of priority between CHO and HO/CHO/CSC
(5) Configuration capability of priority between CHO and connection request
(6) Configuration capability of priority according to a message including priority information

With respect to the configuration of (4), the priority may be configured according to the cell or the cell information.

### (Capability related to stopping/suspending CHO)

With respect to capabilities related to stopping/suspending CHO, the network may store (hold) information indicating whether the user apparatus 20 has capabilities of the following (1), (2), (3), (4), (5), (6), (7), (8), and (9) in advance, and the user apparatus 20 may have a part or all of the capabilities of the following (1), (2), (3), (4), (5), (6), (7), (8), and (9). The information indicating whether the user apparatus 20 has capabilities of the following (1), (2), (3), (4), (5), (6), (7), (8), and (9) may be reported to a network by the user apparatus 20. The information to be reported may include a part or all of the information indicating whether the user apparatus 20 has capabilities of the following (1), (2), (3), (4), (5), (6), (7), (8), and (9).
(1) Capability of suspending CHO when the CHO is subordinated
(2) Capability of configuring whether CHO should be stopped or suspended in case of giving priority to RRC release
(3) Capability of configuring whether CHO should be stopped or suspended in case of giving priority to reconnection
(4) Capability of configuring whether CHO should be stopped or suspended in case of giving priority to HO/CHO/CSC
(5) Capability of configuring whether CHO should be stopped or suspended in case of giving priority to connection request
(6) Capability of configuring whether CHO should be stopped or suspended in case of the CHO being subordinated
(7) Capability of autonomously determining whether CHO should be stopped or suspended in case of the CHO being subordinated, by taking into account the cell information (eNB, gNB, frequency, cell, BWP, beam (e.g., SSB, CSI-RS, TCI), PHR, CSI)
(8) Capability of autonomously determining whether CHO should be stopped or suspended in case of the CHO being subordinated
(9) Capability of reporting a determination result to a network, the result being a result of autonomously determining whether CHO should be stopped or suspended in case of the CHO being subordinated

### (Capability related to resuming/stopping after the suspension)

With respect to capabilities related to resuming/stopping after the suspension, the network may store (hold) information indicating whether the user apparatus 20 has capabilities of the following (1), (2), (3), (4), (5), (6), (7), (8), (9), (10), (11), (12), and (13) in advance, and the user apparatus 20 may have a part or all of the capabilities of the following (1), (2), (3), (4), (5), (6), (7), (8), (9), (10), (11), (12), and (13). The information indicating whether the user apparatus 20 has capabilities of the following (1), (2), (3), (4), (5), (6), (7), (8), (9), (10), (11), (12), and (13) may be reported to a network by the user apparatus 20. The information to be reported may include a part or all of the information indicating whether the user apparatus 20 has capabilities of the following (1), (2), (3), (4), (5), (6), (7), (8), (9), (10), (11), (12), and (13).
(1) Capability of resuming the suspended CHO operation when the prioritized operation is finished
(2) Capability of resuming the suspended CHO operation according to a resume timer
(3) Capability of starting the resume timer at the timing when the CHO operation is suspended
(4) Capability of starting the resume timer at the timing when the prioritized operation is started
(5) Capability of starting the resume timer at the timing when the prioritized operation is finished
(6) Capability of starting the resume timer at the timing when a resume timer start message is received from the network using RRC, MAC CE, or an L1 signal
(7) Capability of starting the resume timer at the timing when a value of the resume timer is updated
(8) Capability of configuring an expiration value of the resume timer from a network
(9) Capability of resuming the suspended CHO operation according to a resume message for the suspended CHO
(10) Capability of stopping the suspended CHO operation according to a stop message for the suspended CHO
(11) Capability of stopping the suspended CHO operation according to an RRC release
(12) Capability of stopping the suspended CHO operation according to a cell change
(13) Capability of stopping the suspended CHO operation according to a reconnection

It should be noted that embodiments of the present invention are not limited to the embodiments described above.

Processes in the embodiments described above may be applicable in a case where another operation occurs when a user apparatus is performing a certain operation (e.g., in a case of conflicting operations).

### (CSC)

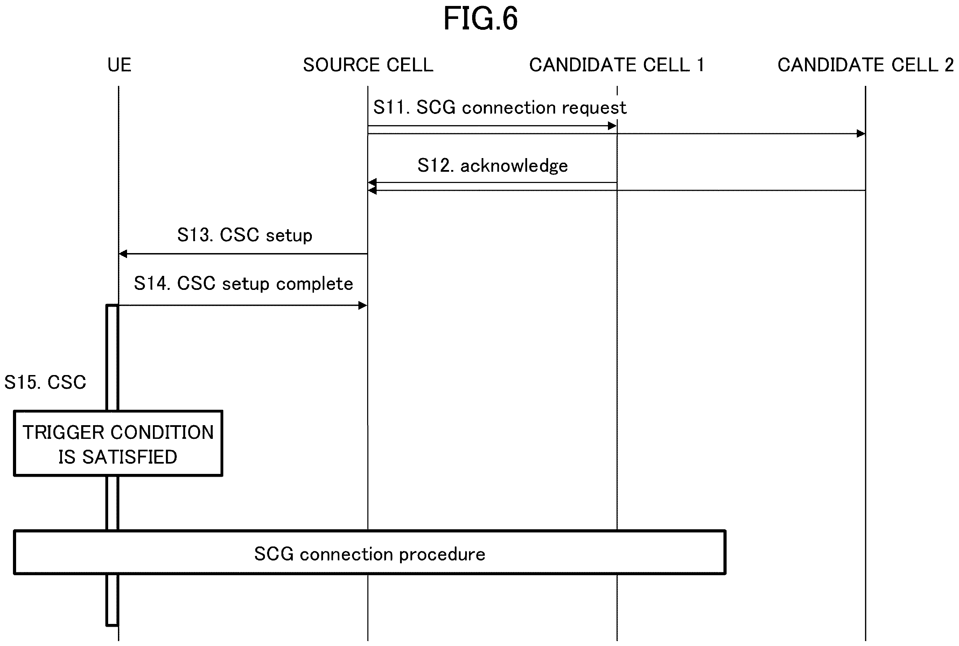

Fig. 6 is a drawing illustrating CSC. There is a technique referred to as a conditional SCG connection (CSC) in which a target cell candidate is configured in advance for a user apparatus and the user apparatus requests for connection to the target cell by using quality, or the like, as a trigger. In step S11 of Fig. 6, an SCG connection request (for example, SCG connection request) is transmitted from a source cell to a candidate cell 1 and a candidate cell 2. Here, the source cell, the candidate cell 1, and the candidate cell 2 may be cells within the same base station apparatus 10, or may be cells belonging to different base station apparatuses 10. In step S12, acknowledgment (acknowledge) is transmitted from the candidate cell 1 and the candidate cell 2 to the source cell. In step S13, a CSC setup is transmitted from the source cell to a user apparatus UE. In step S14, a CSC setup complete is transmitted from the user apparatus UE to the source cell. In step S15, the user apparatus UE executes a SCG connection procedure when a trigger condition, such as quality, is satisfied. Signaling between the base station and the user apparatus may be performed using RRC messages (e.g., RRC connection reconfiguration, RRC connection reconfiguration complete). It should be noted that the SCG connection may include an addition/change procedure of SpCell (e.g., anchor cell such as PSCell), a procedure including a random access procedure, a procedure including ReconfigurationWithSync (non patent document 3), a procedure of connecting to a cell/frequency/band/BWP/base station (currently not configured) different from the current cell/frequency/band/BWP/base station, or a procedure of connecting to a cell/frequency/band/BWP/base station indicated by the base station.

An SCG connection sequence illustrated in Fig. 6 is a sequence in which HO request, CHO setup, CHO setup complete, CHO state, and HO procedure illustrated in Fig. 2 are replaced with CSC request, CSC setup, CSC setup complete, CSC state, and SCG connection procedure, respectively. Therefore, in the following descriptions, sequence diagrams will be omitted.

### (Problem)

In the case where, after the transmission of CSC setup complete from the user apparatus UE to the source cell in step S14 of Fig. 6, a SCG connection indication is transmitted from the source cell to the user apparatus UE, it is not specified which of an operation of CSC, in which the CSC setup has been completed, or an operation of SCG connection indicated by the SCG connection indication should be given priority. In other words, conflict handling between an operation of CSC in the user apparatus UE and an operation of the indicated SCG connection is not specified.

For example, due to the fact that the conflict handling is not specified, there may be a case in which, in spite of the fact that the user apparatus UE is expected to give priority to the SCG connection indicated by a network to improve load balancing, the user apparatus UE may give priority to the CSC operation (depending on the implementation of the user apparatus UE). In this case, there is a problem of decreased throughput due to the degradation of network connectivity.

### (Embodiment 2)

As an embodiment 2, in a case where another operation is triggered after the transmission of a Complete (Complete) for a CSC configuration message, there is consideration of: determining which of the CSC operation or the other operation should be given priority; executing an operation that has been given priority; and stopping or holding (suspending) an operation that has not been given priority. It should be noted that, in the case where an operation that has not been given priority is suspended (held), the suspended operation may be resumed by a resume trigger.

It should be noted that, as opposed to the operation that has been given priority (prioritized operation), an operation that has not given priority may be referred to as an operation that has been non-prioritized, or a subordinated operation (non-prioritized operation).

It is assumed that HO request, CHO setup, CHO setup complete, CHO state, and HO procedure illustrated in Fig. 4 are replaced with CSC request, CSC setup, CSC setup complete, CSC state, and SCG connection procedure, respectively.

In step S4 of Fig. 4, in which the above replacing is assumed, after a CSC setup complete is transmitted from the user apparatus UE to the source cell, a CSC request is transmitted from the source cell to the candidate cell 3 in step S6, an acknowledgment (acknowledge) is transmitted from the candidate cell 3 to the source cell in step S7, and an SCG connection indication is transmitted from the source cell to the user apparatus UE in step S8. In this way, when another operation (e.g., an SCG connection operation based on the SCG connection indication) is triggered after the transmission of CSC setup complete, the user apparatus UE may determine priorities between the CHO operation and the other triggered operation.

For example, the priorities may be determined according to priorities defined in advance between the CSC operation and operations of the following (1), (2), (3) and (4), or the priorities may be configured by a network. Further, the priorities may vary in accordance with CSC operation phases (e.g., a trigger-waiting phase, connection-request-transmitted phase). There may be priority orders between the CSC operation and the operations of the following (1), (2), (3) and (4). Further, the priority orders may be configured by taking into account various information items in (3), and the priorities may be configured by taking into account operation types of various connection requests included in (4).
(1) RRC release operation
(2) Reconnection operation
(3) Operations of HO, other CSC, and other CHO
(4) Operations of connection request

With respect to priorities between the CSC operation and operations of HO, other CSC, and other CHO, the priorities may be configured according to the target cell/cell information (eNB, gNB, frequency, cell, BWP (Bandwidth part), beam (e.g., SSB, CSI-RS, TCI), PHR (Power headroom), CSI).

The operations of connection request in the above (4) include a random access procedure by PDCCH order (PDCCH order RA procedure) in case of uplink out of synchronization, and a random access procedure triggered by an SR (Scheduling Request) (RA procedure triggered by SR).

Priority information for the CSC operation may be indicated by a message for indicating (triggering) other operations, and the priority may be determined according to the indicated priority information.

### (Process in case of the CSC operation having been subordinated)

After the CSC operation has been subordinated, the user apparatus 20 may stop or hold (suspend) the CSC operation.

The CSC operation may be stopped or held according to the prioritized operation. Whether the CSC operation should be stopped or held may be configured by a network for each of the prioritized operations.

The prioritized operations may include operations of the above (1), (2), (3) and (4).

Information indicating stopping or holding (suspending) of the CSC operation may be indicated by a message for indicating (triggering) other operations. The CSC operation may be stopped or held (suspended) according to the indicated information.

The user apparatus 20 may autonomously determine whether the CSC operation should be stopped or held (suspended).

In the case where the user apparatus 20 autonomously performs the determination, cell information items (eNB, gNB, frequency, cell, BWP, beam (e.g., SSB, CSI-RS, TCI), PHR, CSI) may be taken into account, or the user apparatus 20 may be configured by a network to take into account the cell information items, or what should be taken into account may be configured by a network.

In the case where the user apparatus 20 autonomously determines whether the CSC operation should be stopped or held (suspended), the user apparatus 20 may report the determination result to the network using RRC (Radio Resource Control), MAC (Media access control) CE (Control element), or a L1 signal.

### (Resume/stop suspended CSC operation)

It is assumed that HO request, CHO setup, CHO setup complete, CHO state, and HO procedure illustrated in Fig. 5 are replaced with CSC request, CSC setup, CSC setup complete, CSC state, and SCG connection procedure, respectively.

Fig. 5, in which the above replacing is assumed, illustrates a case in which the suspended CSC operation is resumed (restarted) when the prioritized operation is finished.

In the case where the CSC operation is suspended, the suspended CSC operation may be resumed (restarted) when the prioritized operation is finished. Here, in the case where a resume timer is set, the resume timer may be stopped.

In the case where the CSC operation is suspended, the resume timer may be set and the CSC operation may be resumed when the timer expires. Here, a start timing of the resume timer may be: when the CSC operation is suspended; when the prioritized operation is started; when the prioritized operation is finished; when a start message of the resume timer is received from a network using RRC, MAC CE, or an L1 signal; or when a value of the resume timer is updated.

The value of the resume timer (expiration value) may be configured (set) by a network using RRC, MAC CE, or an L1 signal. Further, the expiration value of the resume timer may be a single value, or may be configured (set) in accordance with the prioritized operation or with the source cell/target cell information (RAT, eNB, gNB, frequency, cell, BWP, beam (e.g., SSB, SCI-RS, TCI), PHR, CSI, RSRP (Reference Signal Received Power), RSRQ (Reference Signal Received Quality), and SINR (Signal to Interference plus Noise Ratio)).

The suspended CSC operation may be resumed when a resume message for the suspended CSC operation is received using RRC, MAC CE, or an L1 signal. Here, in the case where a resume timer is set, the resume timer may be stopped.

The suspended CSC operation may be stopped when a stop message for the suspended CSC operation is received using RRC, MAC CE, or an L1 signal. Here, in the case where a resume timer is set, the resume timer may be stopped.

The suspended CSC operation may be stopped when an RRC release is triggered. Here, in the case where a resume timer is set, the resume timer may be stopped.

The suspended CSC operation may be stopped when a cell is changed. Here, in the case where a resume timer is set, the resume timer may be stopped.

The suspended CSC operation may be stopped when a connection is changed. Here, in the case where a resume timer is set, the resume timer may be stopped.

### (Others)

In the case where a suspension and a stop of the CSC operation occur substantially simultaneously, the suspension or the stop may be given priority.

An operation that has occurred earlier may be given priority, or an operation that has occurred later may be given priority.

The stop may be given priority.

Which of the stop or the suspension should be given priority may be configured by a network.

The user apparatus 20 may perform a part or all of the operations of the following (1), (2), and (3) when the CSC operation is stopped or suspended.
(1) MAC reset (in order to stop a random access procedure, and to achieve status matching after the stop)
(2) RLC reset (in order to achieve status matching after the stop)
(3) PDCP reestablishment/PDCP data recovery (in order to achieve status matching after the stop)

### (Configuration capability)

With respect to configuration capability, the network may store (hold) information indicating whether the user apparatus 20 has capabilities of the following (1), (2), (3), (4), (5), and (6) in advance, and the user apparatus 20 may have a part or all of the capabilities of the following (1), (2), (3), (4), (5), and (6). The information indicating whether the user apparatus 20 has capabilities of the following (1), (2), (3), (4), (5), and (6) may be reported to a network by the user apparatus 20. The information to be reported may include a part or all of the information indicating whether the user apparatus 20 has capabilities of the following (1), (2), (3), (4), (5), and (6).
(1) Capability for configuring CSC
(2) Configuration capability of priority between CSC and RRC release by a network
(3) Configuration capability of priority between CSC and reconnection by a network
(4) Configuration capability of priority between CSC and HO/CHO/CSC
(5) Configuration capability of priority between CSC and connection request
(6) Configuration capability of priority according to a message including priority information

With respect to the configuration of (4), the priority may be configured according to the cell or the cell information.

### (Capability related to stopping/suspending CSC)

With respect to capabilities related to stopping/suspending CSC, the network may store (hold) information indicating whether the user apparatus 20 has capabilities of the following (1), (2), (3), (4), (5), (6), (7), (8), and (9) in advance, and the user apparatus 20 may have a part or all of the capabilities of the following (1), (2), (3), (4), (5), (6), (7), (8), and (9). The information indicating whether the user apparatus 20 has capabilities of the following (1), (2), (3), (4), (5), (6), (7), (8), and (9) may be reported to a network by the user apparatus 20. The information to be reported may include a part or all of the information indicating whether the user apparatus 20 has capabilities of the following (1), (2), (3), (4), (5), (6), (7), (8), and (9).
(1) Capability of suspending CSC when the CSC is subordinated
(2) Capability of configuring whether CSC should be stopped or suspended in case of giving priority to RRC release
(3) Capability of configuring whether CSC should be stopped or suspended in case of giving priority to reconnection
(4) Capability of configuring whether CSC should be stopped or suspended in case of giving priority to HO/CHO/CSC
(5) Capability of configuring whether CSC should be stopped or suspended in case of giving priority to connection request
(6) Capability of configuring whether CSC should be stopped or suspended in case of the CSC being subordinated
(7) Capability of autonomously determining whether CSC should be stopped or suspended in case of the CSC beingsubordinated, by taking into account the cell information (eNB, gNB, frequency, cell, BWP, beam (e.g., SSB, CSI-RS, TCI), PHR, CSI)
(8) Capability of autonomously determining whether CSC should be stopped or suspended in case of the CSC being subordinated
(9) Capability of reporting a determination result to a network, the result being a result of autonomously determining whether CSC should be stopped or suspended in case of the CSC being subordinated

### (Capability related to resuming/stopping after the suspension)

With respect to capabilities related to resuming/stopping after the suspension, the network may store (hold) information indicating whether the user apparatus 20 has capabilities of the following (1), (2), (3), (4), (5), (6), (7), (8), (9), (10), (11), (12), and (13) in advance, and the user apparatus 20 may have a part or all of the capabilities of the following (1), (2), (3), (4), (5), (6), (7), (8), (9), (10), (11), (12), and (13). The information indicating whether the user apparatus 20 has capabilities of the following (1), (2), (3), (4), (5), (6), (7), (8), (9), (10), (11), (12), and (13) may be reported to a network by the user apparatus 20. The information to be reported may include a part or all of the information indicating whether the user apparatus 20 has capabilities of the following (1), (2), (3), (4), (5), (6), (7), (8), (9), (10), (11), (12), and (13).
(1) Capability of resuming the suspended CSC operation when the prioritized operation is finished
(2) Capability of resuming the suspended CSC operation according to a resume timer
(3) Capability of starting the resume timer at the timing when the CSC operation is suspended
(4) Capability of starting the resume timer at the timing when the prioritized operation is started
(5) Capability of starting the resume timer at the timing when the prioritized operation is finished
(6) Capability of starting the resume timer at the timing when a resume timer start message is received from the network using RRC, MAC CE, or an L1 signal
(7) Capability of starting the resume timer at the timing when a value of the resume timer is updated
(8) Capability of configuring an expiration value of the resume timer from a network
(9) Capability of resuming the suspended CSC operation according to a resume message for the suspended CSC
(10) Capability of stopping the suspended CSC operation according to a stop message for the suspended CSC
(11) Capability of stopping the suspended CSC operation according to an RRC release
(12) Capability of stopping the suspended CSC operation according to a cell change
(13) Capability of stopping the suspended CSC operation according to a reconnection

### (Conflict Processing between CHC and CSC)

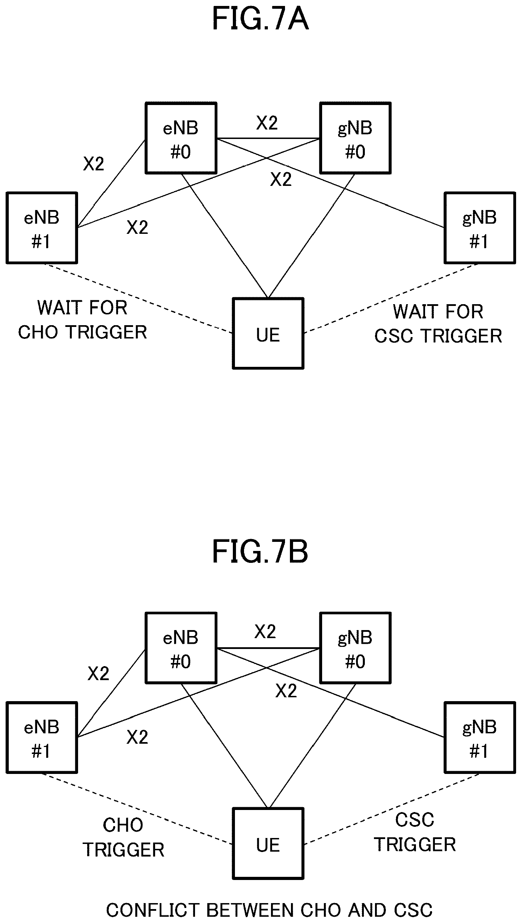

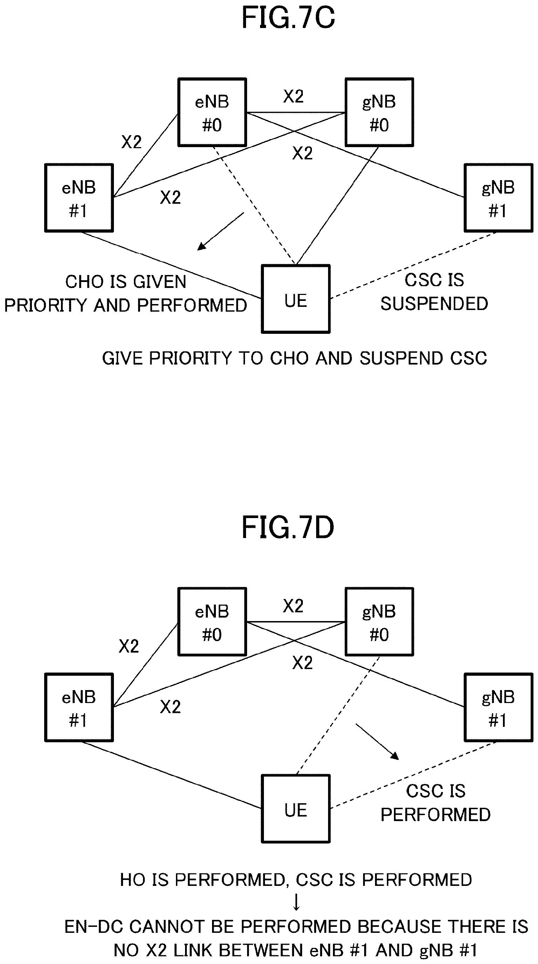

FIGS. 7A, 7B, 7C, and 7D illustrate problems when both CHO and CSC are set.

With reference to FIGS. 7A, 7B, 7C, and 7D, problems will be described where both the CHO from eNB #0 to eNB #1 and the CSC from gNB #0 to gNB #1 are set to the user device 20.

In FIG. 7A, both the CHO from the eNB #0 to the eNB #1 and the CSC from the gNB #0 to the gNB #1 are set relative to the user device 20, and the user device 20 waits for a trigger of the CHO and waits for a trigger of the CSC.

In FIG. 7B, a CHO trigger and a CSC trigger occur almost simultaneously, and the operation of the CHO and the operation of the CSC compete in the user apparatus 20.

In Fig. 7C, when the operation of the CHO takes precedence over the operation of the CSC, the CHO is executed and handed over from eNB #0 to eNB #1, and the operation of the CSC is suspended.

In FIG. 7D, after performing a CHO handover, an operation of the suspended CSC is performed. By performing the operation of the CSC from gNB #0 to gNB #1 which has been suspended, the gNB #1 is connected as an SCG to the user device 20. However, since there is no X2 link between eNB #1 as MCG and gNB #1 as SCG, it is impossible to provide EN-DC (EUTRA-NR Dual Connectivity).

In order to prevent such problems from occurring, according to an embodiment of the present invention, when the operation of the CHO takes precedence over the operation of the CSC in FIG. 7C, it is contemplated that the operation of the subordinated CSC is suspended or stopped based on the information of the cells moved due to the handover of the prioritized CHO. Specifically, considering the fact that there is no X2 link between the handover destination cell (eNB #1) by the CHO and the SCG connection destination cell (gNB #2) by the CSC, it may be determined that the CSC will not be suspended but will be aborted.

In this way, load balancing can be realized by configuring whether to cancel or hold subordinated CSCs according to the priority HO, other CSCs, and cell/cell information (RAT, eNB, gNB, frequency, cell, BWP, beam (e.g., SSB, CSI-RS, TCI), PHR, and CSI) that is the target of other CHO connections, thereby improving throughput by improving connectivity.

Embodiments of the present invention provide a technique for defining whether CHO/CSC or other operations take precedence in a wireless communication system, allowing load balancing and improving throughput by improving connectivity.

### (Apparatus structure)

Next, examples of functional structures of the base station apparatus 10 and the user apparatus 20 that perform the processes and operations described above will be described. The base station apparatus 10 and the user apparatus 20 each have functions for performing an embodiment of the present invention. It should be noted that the base station apparatus 10 and the user apparatus 20 each may have only a part of the functions for performing an embodiment of the present invention.

### <Base station apparatus 10>

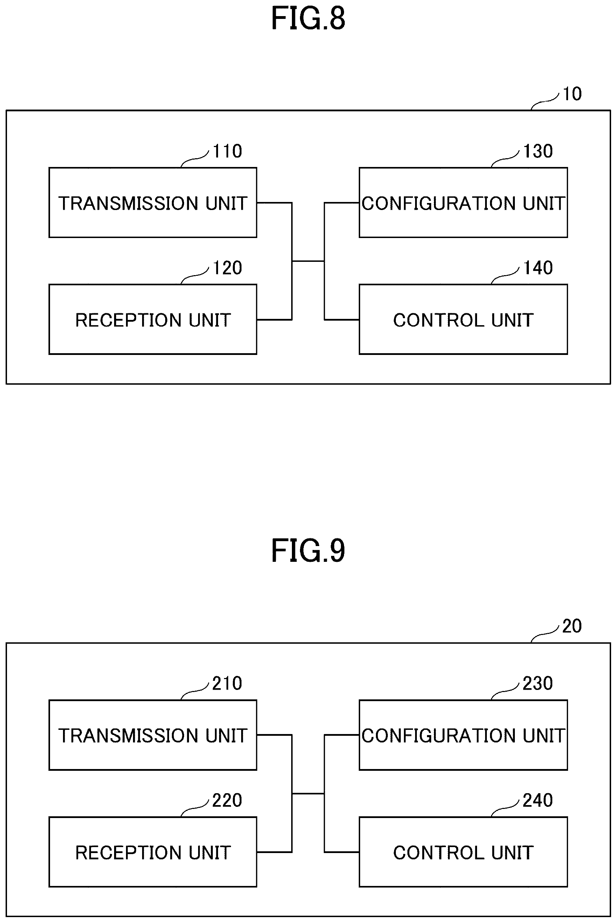

Fig. 8 is a drawing illustrating an example of a functional structure of a base station apparatus 10. As illustrated in Fig. 8, the base station apparatus 10 includes a transmission unit 110, a reception unit 120, a configuration unit 130, and a control unit 140. The functional structure illustrated in Fig. 8 is merely an example. Functional divisions and names of functional units may be anything as long as operations can be performed according to an embodiment of the present invention.

The transmission unit 110 has a function for generating a signal to be transmitted to the user apparatus 20 and for transmitting the signal wirelessly. The reception unit 120 has a function for receiving various signals transmitted from the user apparatus 20 and for obtaining, for example, upper layer information from the received signals.

The configuration unit 130 stores, in a storage device, pre-configured configuration information and various configuration information items to be transmitted to the user apparatus 20, and reads them from the storage device if necessary. Contents of the configuration information are, for example, information related to measurement of the user apparatus 20.

The control unit 140 performs a process of generating a measurement configuration (setting) of the user apparatus 20. Further, the control unit 140 performs communication control based on a measurement report obtained from the user apparatus 20. The functional units related to signal transmission in the control unit 140 may be included in the transmission unit 110, and the functional units related to signal reception in the control unit 140 may be included in the reception unit 120.

### <User apparatus 20>

Fig. 9 is a drawing illustrating an example of a functional structure of a user apparatus 20. As illustrated in Fig. 9, the user apparatus 20 includes a transmission unit 210, a reception unit 220, a configuration unit 230, and a control unit 240. The functional structure illustrated in Fig. 9 is merely an example. Functional divisions and names of functional units may be anything as long as operations can be performed according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has functions for receiving a DL/UL control signal, etc., transmitted from the base station apparatus 10.

The configuration unit 230 stores, in a storage device, various configuration information items received from the base station apparatus 20 via the reception unit 220, and reads them from the storage device if necessary. Further, the configuration unit 230 also stores pre-configured configuration information. Contents of the configuration information are, for example, information related to measurement of the user apparatus 20.

As described in an embodiment of the present invention, the control unit 240 determines which of the CHO/CSC operation or another operation should be given priority when the other operation is triggered after the transmission of a CHO/CSC complete message. Further, the functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 8 and Fig. 9), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

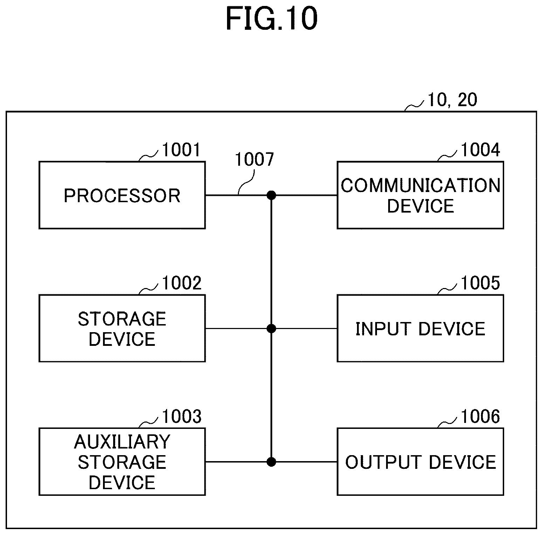

For example, the base station apparatus 10, the user apparatus 20, or the like according to an embodiment of the present invention may function as a computer for processing the radio communication method illustrated by an embodiment of the present invention. Fig. 10 is a drawing illustrating an example of hardware structures of a base station apparatus 10 and a user apparatus 20 according to an embodiment of the present invention. Each of the base station apparatus 10 and the user apparatus 20 may be physically a computer apparatus including a processor 1001, a storage device 1002, an auxiliary storage device 1003, a communication device 1004, an input device 1005, an output device s 1006, a bus 1007, etc.

It should be noted that, in the descriptions below, the term "apparatus" can be read as a circuit, a device, a unit, etc. The hardware structures of the base station apparatus 10 and the user apparatus 20 may include one or more of each of the apparatuses illustrated in the figure, or may not include some apparatuses.

Each function in the base station apparatus 10 and the user apparatus 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station apparatus 10 illustrated in Fig. 8 may be realized by control programs that are stored in the storage device 1002 and are executed by the processor 1001. Further, for example, the control unit 240 of the user apparatus 20 illustrated in Fig. 9 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The auxiliary storage device 1003 may be referred to as an auxiliary storage apparatus. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station apparatus 10 and the user apparatus 20 may include hardware such as a micro-processor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a user apparatus is provided. The user apparatus includes a transmission unit configured to transmit a complete message for a conditional handover (CHO) setup message, and a control unit configured to determine, when a predetermined operation is triggered after the transmission of the complete message, which of an operation of the CHO or the predetermined operation is to be given priority. The control unit stops or suspends an operation that has not been given the priority.

According to an embodiment of the present invention, a user apparatus is provided. The user apparatus includes a transmission unit configured to transmit a complete message for a conditional SCG connection (CSC) setup message, and a control unit configured to determine, when a predetermined operation is triggered after the transmission of the complete message, which of an operation of the CSC or the predetermined operation is to be given priority. The control unit stops or suspends an operation that has not been given the priority.

According to the above arrangement, a technique is provided that clearly specifies which of the CHO operation/CSC operation or the other operation should be given priority, and thus, load balancing is realized, and the throughput is increased by the improved connectivity.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, a base station apparatus 10 and a user apparatus 20 have been described by using functional block diagrams. However, the apparatuses may be realized by hardware, software, or a combination of hardware and software. The software executed by a processor included in a base station apparatus 10 according to an embodiment of the present invention and the software executed by a processor included in a user apparatus 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station apparatus 10 in the present specification, may be performed by an upper node in some cases. In a network including one or more network nodes including a base station apparatus 10, it is apparent that various operations performed for communicating with a user apparatus 20 may be performed by the base station apparatus 10 and/or another network node other than the base station apparatus 10 (for example, but not limited to, MME or S-GW). According to the above, a case is described in which there is a single network node other than the base station apparatus 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputing", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

- 10: Base station apparatus
- 110: Transmission unit
- 120: Reception unit
- 130: Configuration unit
- 140: Control unit
- 20: User apparatus
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A user apparatus comprising:
a control unit configured to determine, when a predetermined operation is triggered in a case of a predetermined-condition-based SCG connection having been configured, which of an operation of the predetermined-condition-based SCG connection or the predetermined operation is to be given priority, wherein
the control unit stops or suspends an operation that has not been given the priority.

2. The user apparatus according to claim 1, wherein, in a case where the operation that has not been given priority is suspended, the control unit resumes the suspended operation based on a resume trigger.

3. The user apparatus according to claim 1, wherein, in a case where the stop and the suspension of the operation that has not been given priority occur substantially simultaneously, the control unit performs the stop or the suspension by giving priority to the stop or the suspension.

4. The user apparatus according to claim 1, wherein, in a case where the operation that has not been given priority is stopped or suspended, the control unit performs at least one of a MAC reset, a RLC reset, and a PDCP reestablishment/PDCP data recovery.

5. The user apparatus according to claim 1, wherein the transmission unit is configured to transmit capability information of the user apparatus to a network, the capability information being related to determining which of the SCG connection operation or the predetermined operation is to be given priority.

6. A communication method of a user apparatus, the communication method comprising:
determining, when a predetermined operation is triggered in a case of a predetermined-condition-based SCG connection having been configured, which of an operation of the predetermined-condition-based SCG connection or the predetermined operation is to be given priority, wherein
the determining includes stopping or suspending an operation that has not been given priority.
